# EUROPEAN PATENT APPLICATION

(11) **EP 3 879 698 A1**
(43) Date of publication of application: **15.09.2021**
(21) Application number: 19881052.5
(22) Date of filing: 24.10.2019
(51) Int. Cl.: H02S 30/00, H02S 20/10, H02S 20/32

(54) **SOLAR-POWERED ELECTRICITY GENERATING DEVICE**

(30) Priority: 08.11.2018 JP 2018210607; 21.11.2018 JP 2018218156
(71) Applicant: Sumitomo Electric Industries, Ltd., Osaka-shi, Osaka 541-0041 (JP)
(72) Inventor: HIRAYAMA, Kitae, Osaka-shi, Osaka 541-0041 (JP); KONAKA, Hiroyuki, Osaka-shi, Osaka 541-0041 (JP); MORI, Koji, Osaka-shi, Osaka 541-0041 (JP); KOBAYASHI, Masataka, Osaka-shi, Osaka 541-0041 (JP); YAMAMOTO, Seiji, Osaka-shi, Osaka 541-0041 (JP)
(74) Representative: Boult Wade Tennant LLP
(86) International application number: PCT/JP2019/041715
(87) International publication number: WO 2020/095704

(57) **Abstract**

A photovoltaic apparatus according to the present disclosure includes: a support mechanism including a mount having a shaft body serving as a rotation shaft when tracking the sun, and a drive part configured to drive the shaft body; an array formed on the mount by arranging solar cell modules; and an outer frame portion provided along an outer end surface, of the array, parallel to a central axis direction of the shaft body and located at a position where wind blowing toward the outer end surface initially hits.

## Description

### TECHNICAL FIELD

The present invention relates to a photovoltaic apparatus.

This application claims priority on Japanese Patent Application No. 2018-210607 filed on November 8, 2018 and Japanese Patent Application No. 2018-218156 filed on November 21, 2018, the entire contents of which are incorporated herein by reference.

### BACKGROUND ART

There is a sun tracking type photovoltaic apparatus in which a light receiving panel (hereinafter, referred to as array) supported on the ground by a support mechanism moves so as to track the sun. In a concentrator photovoltaic apparatus, in order to concentrate sunlight on a small power generating element, it is essential to match the azimuth and elevation of the array with the sun by biaxial drive. In the case of a general photovoltaic apparatus using crystalline silicon, power can be generated even if the photovoltaic apparatus is fixed on the ground or a building, but, for example, if the sun is tracked even with only one axis, the power generation efficiency can be further improved.

As for the sun tracking type photovoltaic apparatus, since a large array is installed outdoors, the support mechanism for the array needs to be designed to be able to withstand the load due to the assumed strong wind.

However, in reality, due to a trade-off with cost, it is not rational to produce a support mechanism that can withstand any violent wind. Therefore, it is realistic to grasp the wind speed and direction by a sensor, and take, for example, a retreat attitude in which the array is made horizontal, when the load due to wind exceeds a threshold value, thereby allowing the wind to pass therethrough and reducing the load to be within the strength range of the support mechanism (see, for example, PATENT LITERATURES 1 and 2).

### CITATION LIST

### [PATENT LITERATURE]

PATENT LITERATURE 1: Japanese Laid-Open Patent Publication No. 2014-203911
PATENT LITERATURE 2: International Publication No. WO2012/073705

### SUMMARY OF INVENTION

The present disclosure includes the following invention. However, the present invention is defined by the claims.

A photovoltaic apparatus according to an aspect of the present disclosure includes: a support mechanism including a mount having a shaft body serving as a rotation shaft when tracking the sun, and a drive part configured to drive the shaft body; an array formed on the mount by arranging solar cell modules; and an outer frame portion provided along an outer end surface, of the array, parallel to a central axis direction of the shaft body and located at a position where wind blowing toward the outer end surface initially hits.

### BRIEF DESCRIPTION OF DRAWINGS

FIG. 1 is a perspective view of an example of one concentrator photovoltaic apparatus as viewed from the light receiving surface side.
FIG. 2 is a diagram showing the photovoltaic apparatus in FIG. 1 in a state of being assembled.
FIG. 3 is a perspective view showing an example in which an array faces the sun directly from the front and is in an oblique attitude.
FIG. 4 is a side view of the photovoltaic apparatus in which the array is in a retreat attitude.
FIG. 5 is a side view in which the array of the photovoltaic apparatus to which outer frame portions are provided is in the retreat attitude.
FIG. 6 is an enlarged view of the left end side of the array in FIG. 5.
FIG. 7 is a diagram in which an outer frame portion having a shape different from that of the outer frame portion in FIG. 6 is used.
FIG. 8 is a diagram in which an outer frame portion having a shape different from those of the outer frame portions in FIG. 6 and FIG. 7 is used.
FIG. 9 is a diagram in which an outer frame portion having a shape different from those of the outer frame portions in FIG. 6, FIG. 7, and FIG. 8 is used.
FIG. 10 is a partial perspective view in which an outer frame portion having another shape is used for the array.
FIG. 11 is a partial perspective view in which an outer frame portion having still another shape is used for the array.
FIG. 12 is a perspective view showing an example in which outer frame portions are provided at four sides of an outer end surface of the array.
FIG. 13 is a partially enlarged view of the array including an outer frame portion as a modification of FIG. 8.
FIG. 14 is a perspective view in which, in an outer frame portion whose outer peripheral surface is a cylindrical surface as shown, for example, in a first example (FIG. 6), a large number of dimples are formed on the cylindrical surface thereof.
FIG. 15 is a perspective view in which, in an outer frame portion having a semi-cylindrical shape or a semi-columnar shape as shown, for example, in a fourth example (FIG. 9), a plurality of projections are formed on a semi-cylindrical surface thereof.
FIG. 16 is an enlarged view of an end portion of the array as viewed, for example, similarly to FIG. 6.
FIG. 17 is a perspective view of each portion shown in FIG. 16.
FIG. 18 is a perspective view showing a configuration in which, similar to FIG. 12, the outer end surface of the array is covered by outer frame portions having a corrugated plate shape, as a reference example.

### DESCRIPTION OF EMBODIMENTS

### [Problems to be solved by the present disclosure]

It is one effective measure to take a retreat attitude in which an array is made horizontal, during strong wind. However, it has become clear that there is another problem. The problem is torsional vibration of the array due to strong wind. When the array torsionally vibrates, a large load is particularly applied to a drive part. It is technically possible to make a drive part that can withstand a large load, but it is difficult to make such a drive part in terms of cost. Therefore, there is a desire to take measures against vibration by devising the array while keeping the drive part as it is.

In view of the above problems, an object of the present disclosure is to suppress torsional vibration of an array in a photovoltaic apparatus even during strong wind.

### [Effects of the present disclosure]

With the photovoltaic apparatus according to the present disclosure, it is possible to suppress torsional vibration of the array even during strong wind.

### [Summary of embodiments]

A summary of embodiments of the present disclosure includes at least the following.
(1) A photovoltaic apparatus according to the present disclosure includes: a support mechanism including a mount having a shaft body serving as a rotation shaft when tracking the sun, and a drive part configured to drive the shaft body; an array formed on the mount by arranging solar cell modules; and an outer frame portion provided along an outer end surface, of the array, parallel to a central axis direction of the shaft body and located at a position where wind blowing toward the outer end surface initially hits.
   In the photovoltaic apparatus configured as described above, the outer frame portion is provided along the outer end surface, of the array, parallel to the central axis direction of the shaft body and is further located at the position where wind blowing to the outer end surface initially hits. Therefore, the outer frame portion is dominant in terms of the flow of wind. Thus, by the outer frame portion, for example, the flow of wind can be evenly divided along the front face and the back face of the array, or the flow of wind can be disturbed to suppress occurrence of separated flow. When separated flow can be suppressed, generation of torque around the central axis of the shaft body can be suppressed. Thus, torsional vibration of the array can be suppressed even during strong wind.
(2) In the photovoltaic apparatus of the above (1), the outer frame portion may have, as a shape as viewed from an end surface in a longitudinal direction thereof, a front face side inclined surface configured to guide wind blowing in a direction parallel to the array, to a front face of the array, and a back face side inclined surface configured to guide the wind to a back face of the array.
   In this case, the flow of wind can be divided along the front face and the back face of the array by the front face side inclined surface and the back face side inclined surface of the outer frame portion. By designing the shape, it is possible to make the flow division even.
(3) In the photovoltaic apparatus of the above (2), the shape as viewed from the end surface in the longitudinal direction is, for example, a circular shape or an elliptical shape.
   In this case, the flow of wind can be evenly divided along the front face and back face of the array by the front face side inclined surface and the back face side inclined surface as the inclination based on the curvature in the circular or elliptical shape as viewed in the longitudinal direction.
(4) In the photovoltaic apparatus of the above (2), the shape as viewed from the end surface in the longitudinal direction is, for example, a triangular shape having a base on the outer end surface side.
   In this case, the flow of wind can be evenly divided along the front face and the back face of the array by forming the shape, for example, as an equilateral triangle or an isosceles triangle. In addition, in this case, since the surface opposed to the outer end surface is a flat surface, mounting is easy.
(5) In the photovoltaic apparatus of the above (2), the shape as viewed from the end surface in the longitudinal direction is, for example, a semi-circular shape or a semi-elliptical shape having a straight line on the outer end surface side.
   In this case, the flow of wind can be evenly divided along the front face and back face of the array by the front face side inclined surface and the back face side inclined surface as the inclination based on the curvature in the semi-circular or semi-elliptical shape as viewed in the longitudinal direction. In addition, in this case, since the surface opposed to the outer end surface is a flat surface, mounting is easy.
(6) In the photovoltaic apparatus of any of the above (1) to (6), a plurality of dimples or projections may be formed on a surface of the outer frame portion.
   The dimples or projections contribute to finely disturbing the flow of air.
(7) In the photovoltaic apparatus of any of the above (1) to (6), a plurality of plate-like or rod-like members may be provided between the outer frame portion and the outer end surface so as to be spaced apart from each other and protrude with respect to the front face and the back face of the array.
   The members in this case contribute to finely disturbing the flow of air.
(8) In the photovoltaic apparatus of the above (1), for example, a plurality of inclined portions extending obliquely with respect to the central axis are present in the outer frame portion at predetermined intervals.
   Extending obliquely with respect to the central axis means, for example, a shape extending obliquely with respect to the central axis when the array with a horizontal attitude is viewed sideways in a direction parallel to the central axis, or a shape extending obliquely with respect to the central axis when the array with a horizontal attitude is viewed from directly above. By having portions having such a shape, it is possible to disturb the flow of wind to suppress occurrence of separated flow.
(9) In the photovoltaic apparatus of the above (8), the outer frame portion may be in a net-like form facing the outer end surface.
   In this case, the flow of wind can be disturbed along the front face and the back face of the array.
(10) In the photovoltaic apparatus of the above (8), the outer frame portion may have a projection spirally formed on a cylindrical or columnar surface thereof.
   In this case, the flow of wind can be disturbed in a direction perpendicular to or having an oblique angle to the array in addition to the direction along the front face and the back face of the array.
(11) In the photovoltaic apparatus of any of the above (1) to (10), the outer frame portion may be a first outer frame portion, and the photovoltaic apparatus may include a second outer frame portion provided along an outer end surface, of the array, extending in a direction orthogonal to the central axis direction of the shaft body.

In this case, torsional (or bending) vibration of the array can be suppressed against wind blowing from all directions to the array.

### [Details of embodiments]

Hereinafter, a photovoltaic apparatus according to an embodiment of the present disclosure will be described with reference to the drawings.

### <<Basic structure of photovoltaic apparatus>>

Hereinafter, a photovoltaic apparatus according to an embodiment of the present invention will be described with reference to the drawings.

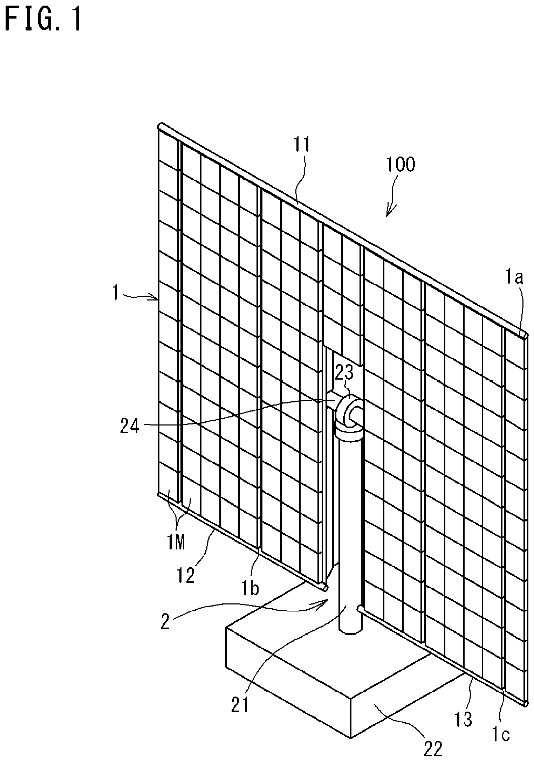

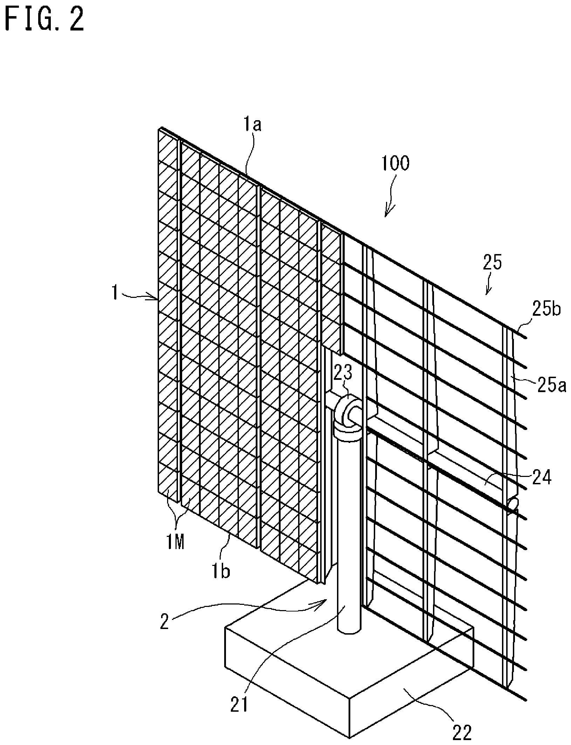

FIG. 1 and FIG. 2 are each a perspective view of an example of one concentrator photovoltaic apparatus viewed from the light receiving surface side. FIG. 1 shows a photovoltaic apparatus 100 in a completed state, and FIG. 2 shows the photovoltaic apparatus 100 in a state of being assembled. The right half of FIG. 2 shows a state where the framework of a tracking mount 25 is seen, and the left half of FIG. 2 shows a state where concentrator solar cell modules (hereinafter, also referred to simply as modules) 1M are mounted. In actuality, when the modules 1M are to be mounted to the tracking mount 25, mounting is performed in a state where the tracking mount 25 is laid on the ground.

In FIG. 1, the photovoltaic apparatus 100 includes: a light receiving panel (also referred to as a photovoltaic panel or array) 1 having a planar shape as a whole that is continuous on the upper side and divided into right and left portions on the lower side; and a support mechanism 2 for the array 1. The array 1 is formed by arraying the modules 1M on the tracking mount 25 (FIG. 2) disposed on the rear side. In the example shown in FIG. 1, the array 1 is formed as an assembly composed of 200 modules 1M in total, i.e., (96(=12×8)×2) modules forming the right and left wings and 8 modules 1M forming the connection portion at the center. In each module 1M, a known configuration in which optical systems for concentrating sunlight and guiding the sunlight to a power generating element are arranged in a matrix is mounted.

The support mechanism 2 includes a post 21, a base 22, a drive part 23, a shaft body 24 serving as a rotation shaft, and the tracking mount 25 (FIG. 2). The lower end of the post 21 is fixed to the base 22, and the upper end of the post 21 is provided with the drive part 23.

In FIG. 1, the base 22 is firmly embedded in the ground to an extent that only the upper face of the base 22 is seen. In the state where the base 22 is embedded in the ground, the post 21 extends vertically, and the shaft body 24 (FIG. 2) extends horizontally. The drive part 23 can rotate the shaft body 24 in two directions of azimuth (angle around the post 21 as the central axis) and elevation (the angle around the shaft body 24 as the central axis). In FIG. 2, a reinforcement member 25a that reinforces the tracking mount 25 is mounted to the shaft body 24. In addition, a plurality of rails 25b extending in the horizontal direction are mounted to the reinforcement member 25a. The modules 1M are mounted so as to be fitted to these rails. If the shaft body 24 is rotated in the direction of azimuth or elevation, the array 1 is also rotated in that direction.

Usually, the array 1 extends vertically as in FIG. 1 at dawn and before sunset.

During the daytime, the drive part 23 operates such that the light receiving surface of the array 1 takes an attitude of always facing the sun directly from the front, and the array 1 performs an operation of tracking the sun.

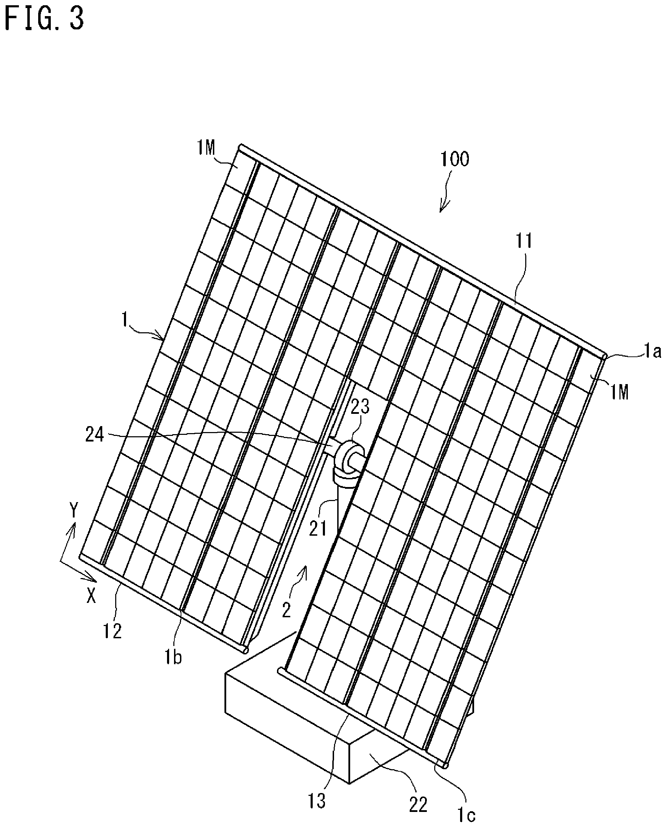

FIG. 3 is a perspective view showing, as an example, an attitude of the array 1 facing the sun directly from the front. If the present time is, for example, the culmination time at a place near the equator, the array 1 takes a horizontal attitude with the light receiving surface thereof facing straight up. In addition, the horizontal attitude of the array 1 facing straight up is also a retreat attitude during strong wind. It should be noted that the array 1 with a night standby attitude takes an attitude opposite to the retreat attitude, that is, takes a horizontal attitude with the light receiving surface thereof facing the ground.

### <<Outer frame portion>>

In FIG. 1 or FIG. 3, for example, an outer frame portion 11 is mounted along an upper end surface 1a, of the array 1, parallel to the central axis of the shaft body 24. In addition, outer frame portions 12 and 13 are mounted along lower end surfaces 1b and 1c, of the array 1, parallel to the central axis of the shaft body 24, respectively. The outer frame portions 11 to 13 can be mounted on the tracking mount 25 (FIG. 2) or on the array 1. Each of the outer frame portions 11 to 13 is, for example, a cylindrical or columnar member.

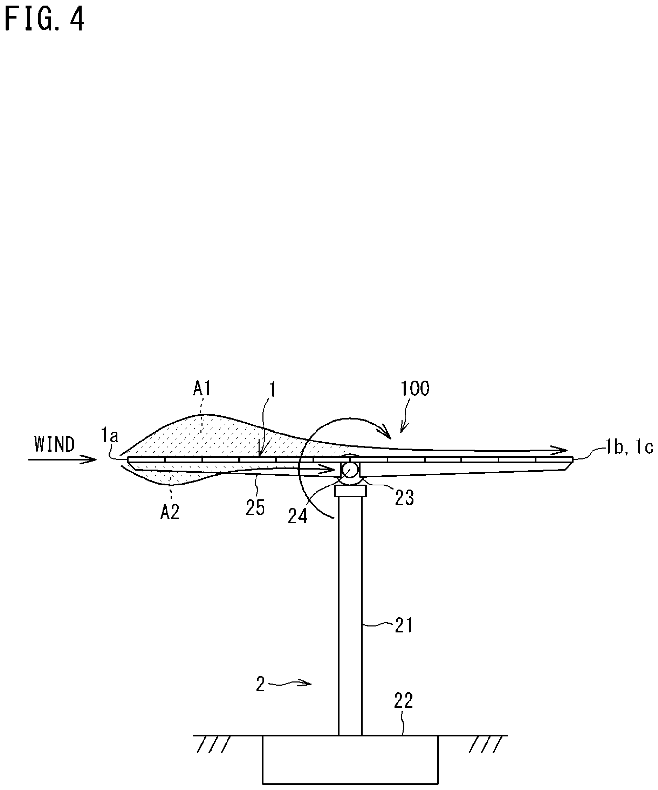

FIG. 4 is a side view of the photovoltaic apparatus 100 in which the array 1 is in the retreat attitude. It should be noted that, in this drawing, for comparison, the outer frame portions 11 to 13 are not provided. Wind is generally blowing sideways. For example, assuming that strong wind is blowing to the array 1 from the left side of FIG. 4, the wind that hits, for example, the upper end surface 1a of the outer end surface of the array 1 usually spreads unevenly vertically.

When the wind that hits the upper end surface 1a is divided vertically, the air starts to flow from a corner at the upper end surface 1a toward a direction away from the front face of the array 1. This flow is referred to as separated flow, and the area between the separated flow and the front face of the array 1 is referred to as a separation region (A1 in FIG. 4). The pressure in the separation region is lower than the ambient pressure since the wind speed of the separated flow becomes faster, so that a force to pull up the left end of the array 1 is generated by the pressure dereference between the larger separation region A1 on the front face side of the array 1 and a smaller separation region A2 on the back face of the array 1. Accordingly, torque is generated in the clockwise direction of the central axis of the shaft body 24.

The separated flow does not occur evenly on the upper and lower sides, and has a feature that the strength thereof changes alternately on the upper and lower sides with the passage of time. Such pressure changes that occur alternately on the upper and lower sides cause torsional vibration of the array 1 around the central axis of the shaft body 24. In addition, for example, forces may act on the left wing and the right wing of the array 1 in opposite directions. In this case, torsional vibration occurs around an axis that is in the plane of the array 1, that passes through the drive part 23, and that is orthogonal to the shaft body 24.

### <<Outer frame portion: first example>>

Here, the action of the outer frame portions 11 to 13, which are omitted in FIG. 4, will be described.

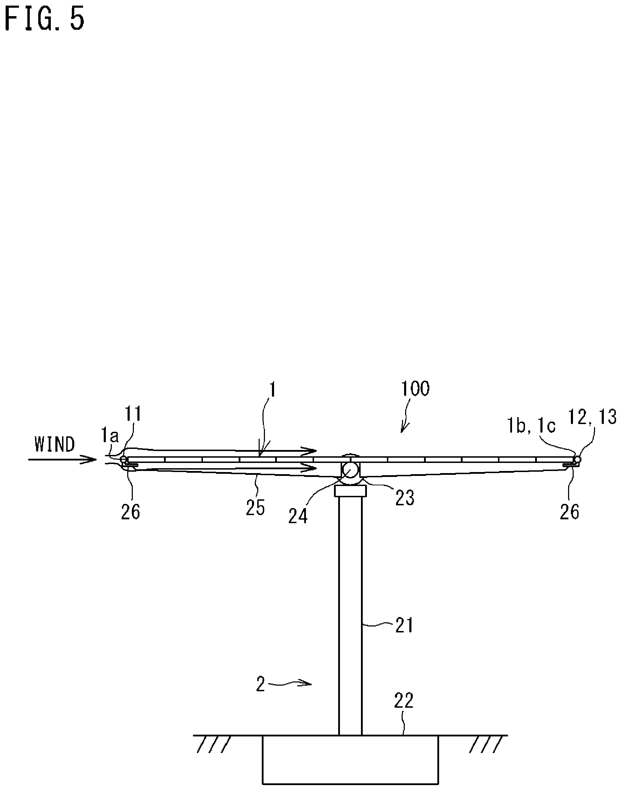

FIG. 5 is a side view in which the array 1 of the photovoltaic apparatus 100 to which the outer frame portions 11, 12, and 13 are provided is in the retreat attitude. For example, assuming that strong wind is blowing to the array 1 from the left side of FIG. 5, the flow of air is divided into upper and lower parts almost evenly by the outer frame portion 11.

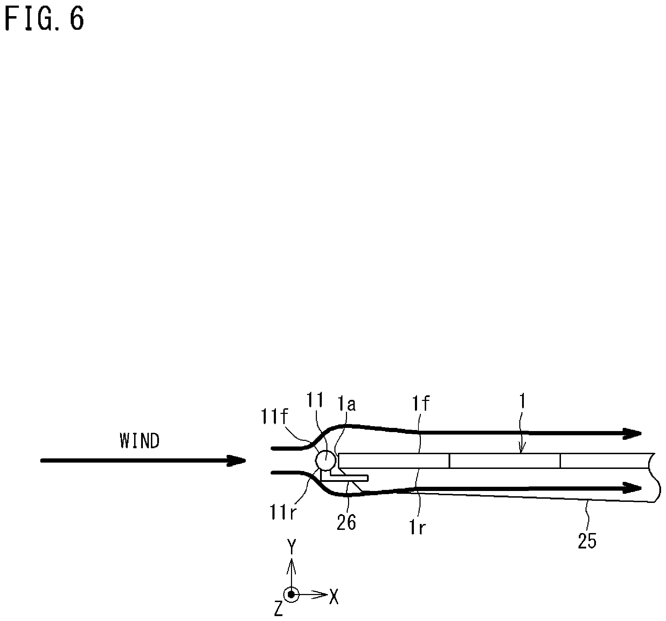

FIG. 6 is an enlarged view of the left end side of the array 1 in FIG. 5. Hereinafter, only the outer frame portion on the upper end surface 1a side is shown in enlarged views (FIG. 6 to FIG. 11), but an outer frame portion is similarly provided on the lower end surfaces 1b and 1c side.

In FIG. 6, the cylindrical or columnar outer frame portion 11 made of metal or resin is supported, for example, by a support arm 26 fixed near an end portion of the tracking mount 25. As shown in FIG. 6, the direction parallel to a front face 1f and a back face 1r of the array 1 is defined as an X direction, the direction perpendicular to the front face 1f and the back face 1r of the array 1 is defined as a Y direction, and the direction orthogonal to the X and Y directions is defined as a Z direction. When the thickness (outer diameter) of the outer frame portion 11 is denoted by d and the thickness of the array 1 is denoted by t, d > t is satisfied. In addition, the center of the outer frame portion 11 and the center in the thickness direction of the array 1 are at the same position in the Y direction. Therefore, in the Y direction perpendicular to the array 1, the outer frame portion 11 protrudes on the front face 1f side and the back face 1r side of the upper end surface 1a of the array 1. Accordingly, the wind blowing in the X direction as shown is received not by the upper end surface 1a of the array 1, but by the outer frame portion 11. Therefore, the form of the outer frame portion 11 is dominant in terms of the flow of wind.

Here, since the outer peripheral surface of the outer frame portion 11 is a cylindrical surface, a smooth front face side inclined surface 11f and a smooth back face side inclined surface 11r are present on the upper and lower sides, respectively. The flow of air blowing from the left side in the X direction is evenly divided vertically along the smooth front face side inclined surface 11f and the back face side inclined surface 11r, and the air flows along the front face 1f and the back face 1r as shown by arrows in the drawing. As a result, the separation region as shown in FIG. 4 is not formed, and generation of a force to rotate the array 1 about the central axis of the shaft body 24 (FIG. 5) is suppressed.

### <<Outer frame portion: second example>>

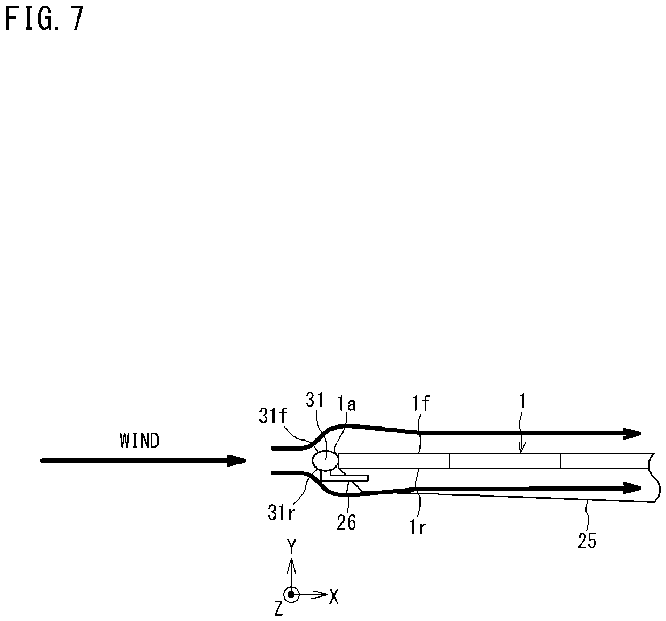

FIG. 7 is a diagram in which an outer frame portion 31 having a shape different from that of the outer frame portion 11 in FIG. 6 is used. The outer frame portion 31 having an elliptical tubular shape or an elliptical columnar shape is supported by the support arm 26 fixed near the end portion of the tracking mount 25. For the outer frame portion 31, the major axis of the ellipse is the X direction, and the minor axis of the ellipse is the Y direction. As shown in FIG. 7, the direction parallel to the front face 1f and the back face 1r of the array 1 is defined as the X direction, the direction perpendicular to the front face 1f and the back face 1r of the array 1 is defined as the Y direction, and the direction orthogonal to the X and Y directions is defined as the Z direction. When the thickness in the Y direction (minor axis) of the outer frame portion 31 is denoted by d and the thickness of the array 1 is denoted by t, d > t is satisfied. In addition, the center of the outer frame portion 31 and the center in the thickness direction of the array 1 are at the same position in the Y direction. Therefore, in the Y direction perpendicular to the array 1, the outer frame portion 31 protrudes on the front face 1f side and the back face 1r side of the upper end surface 1a of the array 1. Accordingly, the wind blowing in the X direction as shown is received not by the upper end surface 1a of the array 1, but by the outer frame portion 31. Therefore, the form of the outer frame portion 31 is dominant in terms of the flow of wind.

Here, since the outer peripheral surface of the outer frame portion 31 is an elliptical tubular surface, a smooth front face side inclined surface 31f and a smooth back face side inclined surface 31r are present on the upper and lower sides, respectively. The flow of air blowing from the left side in the X direction is evenly divided vertically along the smooth front face side inclined surface 31f and the back face side inclined surface 31r, and the air flows along the front face 1f and the back face 1r as shown by arrows in the drawing. As a result, the separation region as shown in FIG. 4 is not formed, and generation of a force to rotate the array 1 about the central axis of the shaft body 24 (FIG. 5) is suppressed.

### <<Outer frame portion: third example>>

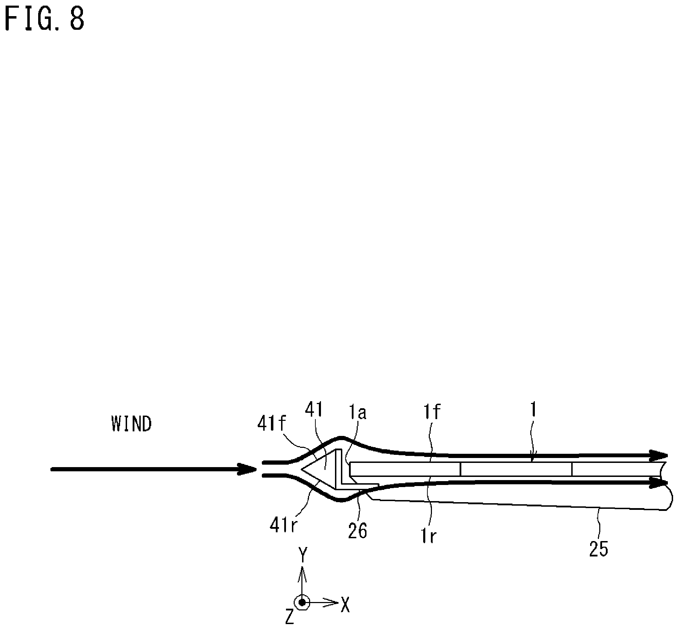

FIG. 8 is a diagram in which an outer frame portion 41 having a shape different from those of the outer frame portions 11 and 31 in FIG. 6 and FIG. 7 is used. The outer frame portion 41 having a triangular tubular shape or a triangular columnar shape is supported by the support arm 26 fixed near the end portion of the tracking mount 25. It should be noted that the triangle is an equilateral triangle or an isosceles triangle. As shown in FIG. 8, the direction parallel to the front face 1f and the back face 1r of the array 1 is defined as the X direction, the direction perpendicular to the front face 1f and the back face 1r of the array 1 is defined as the Y direction, and the direction orthogonal to the X and Y directions is defined as the Z direction. When the thickness in the Y direction (width of the bottom surface in the X direction) of the outer frame portion 41 is denoted by d and the thickness of the array 1 is denoted by t, d > t is satisfied. In addition, the center of the outer frame portion 41 and the center in the thickness direction of the array 1 are at the same position in the Y direction. Therefore, in the Y direction perpendicular to the array 1, the outer frame portion 41 protrudes on the front face 1f side and the back face 1r side of the upper end surface 1a of the array 1. Accordingly, the wind blowing in the X direction as shown is received not by the upper end surface 1a of the array 1, but by the outer frame portion 41. Therefore, the form of the outer frame portion 41 is dominant in terms of the flow of wind.

Here, since the outer peripheral surface of the outer frame portion 41 is a triangular tubular surface, a smooth front face side inclined surface 41f and a smooth back face side inclined surface 41r are present on the upper and lower sides, respectively. The flow of air blowing from the left side in the X direction is evenly divided vertically along the smooth front face side inclined surface 41f and the back face side inclined surface 41r, and the air flows along the front face 1f and the back face 1r as shown by arrows in the drawing. As a result, the separation region as shown in FIG. 4 is not formed, and generation of a force to rotate the array 1 about the central axis of the shaft body 24 (FIG. 5) is suppressed.

### <<Outer frame portion: fourth example>>

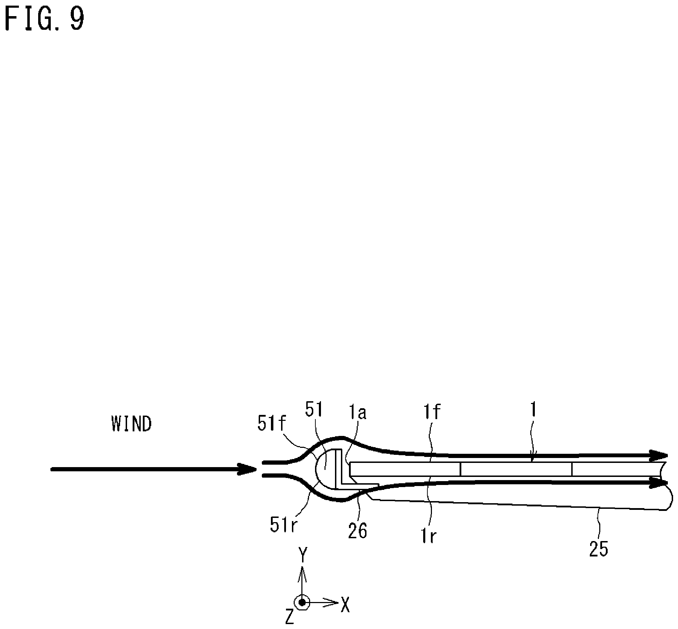

FIG. 9 is a diagram in which an outer frame portion 51 having a shape different from those of the outer frame portions 11, 31, and 41 in FIG. 6, FIG. 7, and FIG. 8 is used. The outer frame portion 51 having a semi-cylindrical shape or a semi-columnar shape is supported by the support arm 26 fixed near the end portion of the tracking mount 25. As shown in FIG. 9, the direction parallel to the front face 1f and the back face 1r of the array 1 is defined as the X direction, the direction perpendicular to the front face 1f and the back face 1r of the array 1 is defined as the Y direction, and the direction orthogonal to the X and Y directions is defined as the Z direction. When the thickness in the Y direction (outer diameter) of the outer frame portion 51 is denoted by d and the thickness of the array 1 is denoted by t, d > t is satisfied. In addition, the center of the outer frame portion 51 and the center in the thickness direction of the array 1 are at the same position in the Y direction. Therefore, in the Y direction perpendicular to the array 1, the outer frame portion 51 protrudes on the front face 1f side and the back face 1r side of the upper end surface 1a of the array 1. Accordingly, the wind blowing in the X direction as shown is received not by the upper end surface 1a of the array 1, but by the outer frame portion 51. Therefore, the form of the outer frame portion 51 is dominant in terms of the flow of wind.

Here, since the outer peripheral surface of the outer frame portion 51 is a cylindrical surface, a smooth front face side inclined surface 51f and a smooth back face side inclined surface 51r are present on the upper and lower sides, respectively. The flow of air blowing from the left side in the X direction is evenly divided vertically along the smooth front face side inclined surface 51f and the back face side inclined surface 51r, and the air flows along the front face 1f and the back face 1r as shown by arrows in the drawing. As a result, the separation region as shown in FIG. 4 is not formed, and generation of a force to rotate the array 1 about the central axis of the shaft body 24 (FIG. 5) is suppressed.

The outer frame portion 51 in the fourth example may have a semi-elliptical tubular shape or a semi-elliptical columnar shape.

### <<Summary of first example to fourth example of outer frame portion>>

The above-described outer frame portions (11, 31, 41, and 51 on the upper end surface side and similar ones on the lower end surface side) have a common feature that the outer frame portion is provided along the outer end surface, of the array 1, parallel to the central axis direction of the shaft body 24 and protrudes on the front face side and the back face side of the outer end surface (for example, the upper end surface 1a, the lower end surfaces 1b and 1c) in the direction perpendicular to the array 1.

In the photovoltaic apparatus 100 configured as described above, the outer frame portion is provided along the outer end surface, of the array 1, parallel to the central axis direction of the shaft body 24, and the outer frame portion also protrudes on the front face side and the back face side of the outer end surface in the direction perpendicular to the array 1. Thus, wind blowing toward the outer end surface does not directly hit the outer end surface but initially hits the outer frame portion. Therefore, the outer frame portion is dominant in terms of the flow of wind. Accordingly, by the outer frame portion, for example, the flow of wind can be evenly divided along the front face and the back face of the array 1, thereby suppressing occurrence of separated flow. When separated flow can be suppressed, generation of torque around the central axis of the shaft body 24 can be suppressed. Thus, vibration of the array 1 accompanied by torsion of the shaft body 24 can be suppressed.

The outer frame portions 11, 31, 41, and 51 have, as a shape as viewed from an end surface in the longitudinal direction thereof, the front face side inclined surfaces 11f, 31f, 41f, and 51f for guiding wind blowing in the X direction parallel to the array 1, to the front face of the array, and the back face side inclined surfaces 11r, 31r, 41r, and 51r for guiding the wind to the back face of the array 1. Accordingly, the flow of wind can be divided along the front face 1f and the back face 1r of the array 1. By designing the shape, it is possible to make the flow division even.

The shape as viewed from the end surface in the longitudinal direction is, for example, a circular shape (FIG. 6) or an elliptical shape (FIG. 7). In this case, the flow of wind can be evenly divided along the front face 1f and back face 1r of the array 1 by the front face side inclined surface 11f or 31f and the back face side inclined surface 11r or 31r as the inclination based on the curvature in the circular or elliptical shape as viewed in the longitudinal direction.

Moreover, the shape as viewed from the end surface in the longitudinal direction is, for example, a triangular shape having a base on the outer end surface side (FIG. 8). In this case, the flow of wind can be evenly divided along the front face 1f and the back face 1r of the array 1. In addition, in this case, since the surface opposed to the outer end surface is a flat surface, mounting is easy.

Furthermore, the shape as viewed from the end surface in the longitudinal direction is, for example, a semi-circular shape or semi-elliptical shape having a straight line on the outer end surface side (FIG. 9). In this case as well, the flow of wind can be evenly divided along the front face 1f and the back face 1r of the array 1. In addition, since the surface opposed to the outer end surface is a flat surface, mounting is easy.

### <<Outer frame portion: fifth example>>

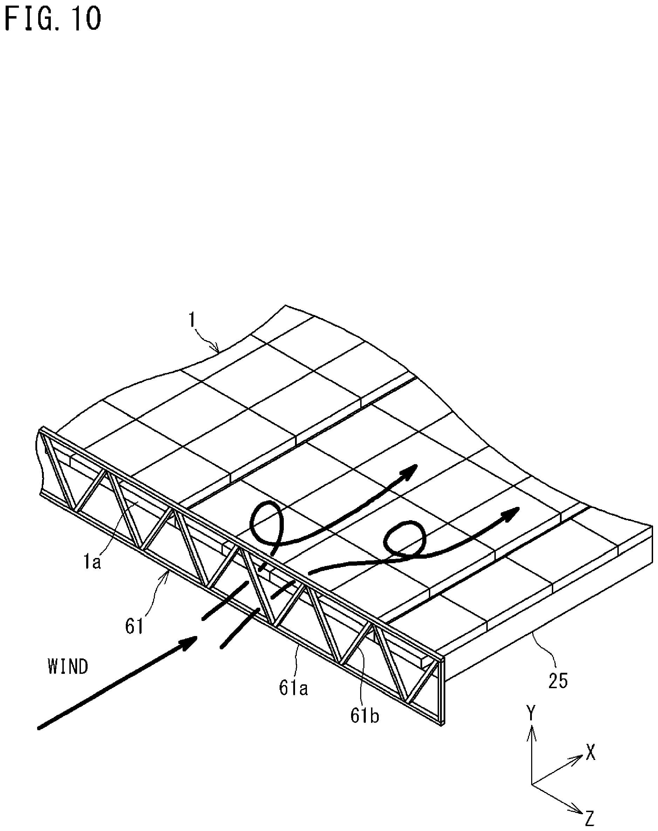

FIG. 10 is a partial perspective view in which an outer frame portion 61 having still another shape is used for the array 1. In FIG. 10, the outer frame portion 61 is mounted on the upper end surface 1a of the array 1 with the retreat attitude so as to be perpendicular to the front face of the array 1 (parallel to the Y-Z plane). The outer frame portion 61 includes a rectangular frame 61a and an inclined portion (obliquely extending portion) 61b having a sawtooth shape, and has a form that can be considered to be net-like as a whole. The inclined portion 61b is oblique in the Y-Z plane, that is, forms an angle with respect to the Y direction and also forms an angle with respect to the Z direction. The Z direction is also the central axis direction of the shaft body 24 (FIG. 5). A plurality of the inclined portions 61b are present at predetermined intervals in the Z direction.

When wind blows to the upper end surface 1a of the array 1 with a horizontal attitude as shown, the presence of the inclined portion 61b causes the effect of disturbing the flow of wind, for example, as shown, thereby suppressing occurrence of separated flow.

### <<Outer frame portion: sixth example>>

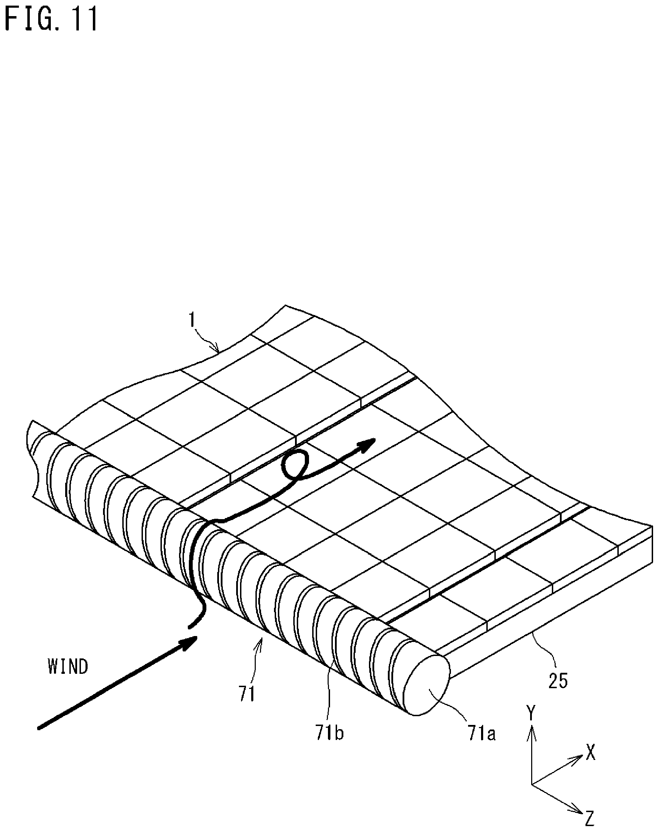

FIG. 11 is a partial perspective view in which an outer frame portion 71 having still another shape is used for the array 1. In FIG. 11, in the outer frame portion 71, a rib 71b is spirally wound around a cylindrical or columnar round bar member 71a. As a matter of course, this is an example, and the outer frame portion 71 may be a processed product or molded product having such a shape. The positional relationship between the round bar member 71a and the array 1 is the same as in FIG. 6. In addition, similar to FIG. 6, the round bar member 71a is mounted on the array 1. The rib 71b forms an angle and is oblique with respect to the Z direction when viewed from any direction orthogonal to the Z axis. A plurality of portions of the rib 71b viewed from any direction are present at predetermined intervals in the Z direction.

When wind blows from the lateral side in a direction along the front face and the back face of the array 1 with a horizontal attitude as shown, the presence of the rib 71b causes the effect of disturbing the flow of wind, for example, as shown, thereby suppressing occurrence of separated flow. In addition, since the rib 71b forms an angle and is oblique with respect to the Z direction when viewed from any direction orthogonal to the Z axis, the rib 71b can also disturb the flow of wind in a direction perpendicular to or having an oblique angle to the array 1.

The round bar member 71a may have an elliptical tubular shape or an elliptical columnar shape.

### <<Summary of fifth example and sixth example of outer frame portion>>

In the fifth example and the sixth example, the outer frame portions 61 and 71 are common in that a plurality of portions extending obliquely with respect to the central axis of the shaft body 24 (FIG. 5) are present at predetermined intervals. Extending obliquely with respect to the central axis means, for example, a shape extending obliquely with respect to the central axis when the array with a horizontal attitude is viewed sideways in a direction parallel to the central axis, or a shape extending obliquely with respect to the central axis when the array with a horizontal attitude is viewed from directly above. By having portions having such a shape, it is possible to disturb the flow of wind to suppress occurrence of separated flow.

### <<Outer frame portion: modification of third example>>

In each embodiment described above, the example in which the outer frame portion protrudes on the front face 1f side and the back face 1r side of the outer end surface 1a in the direction perpendicular to the array 1 has been shown, but the same effect may be achieved even when the outer frame portion does not protrude.

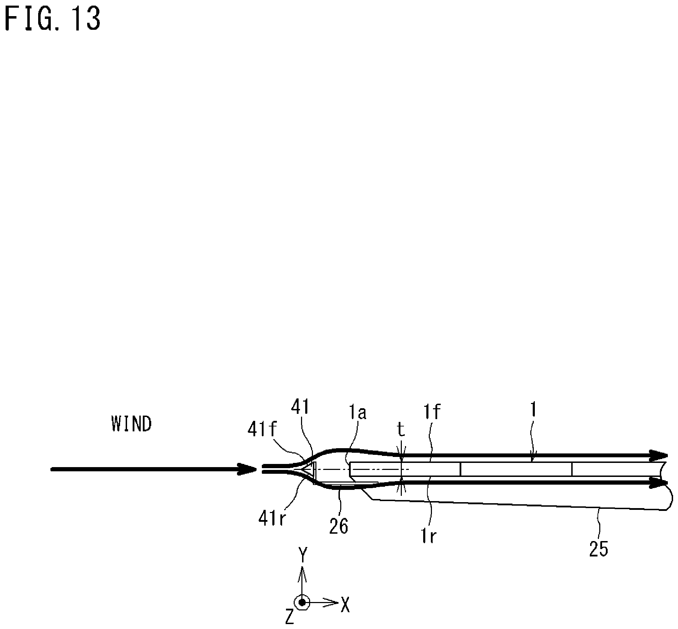

FIG. 13 is a partially enlarged view of the array 1 provided with an outer frame portion 41 as an example. As shown in FIG. 13, the direction parallel to the front face 1f and the back face 1r of the array 1 is defined as the X direction, the direction perpendicular to the front face 1f and the back face 1r of the array 1 is defined as the Y direction, and the direction orthogonal to the X and Y directions is defined as the Z direction. Similar to FIG. 8, this outer frame portion 41 has a triangular end surface shape in the longitudinal direction, but the outer frame portion 41 is smaller than that in FIG. 8, and the support arm 26 is longer in the X direction than that in FIG. 8. When the thickness in the Y direction (width of the bottom surface in the X direction) of the outer frame portion 41 is denoted by d and the thickness of the array 1 is denoted by t, d = t may be satisfied, or d may be slightly smaller than t. The center of the outer frame portion 41 and the center in the thickness direction of the array 1 are at the same position in the Y direction. Since the outer peripheral surface of the outer frame portion 41 is a triangular tubular surface, a front face side inclined surface 41f and a back face side inclined surface 41r are present on the upper side and the lower side, respectively.

In FIG. 13, wind blowing toward the outer end surface 1a initially hits the outer frame portion 41. The flow of wind that hits the outer frame portion 41 is evenly divided vertically along the front face side inclined surface 41f and the back face side inclined surface 41r. Even when the flow-divided wind flows past the outer frame portion 41, the flow-divided wind does not bend sharply if the speed of the wind is sufficient, and flows along the front face 1f and the back face 1r as shown by arrows in the drawing. As a result, the separation region as shown in FIG. 4 is not formed, and generation of a force to rotate the array 1 about the central axis of the shaft body 24 (FIG. 5) is suppressed. Therefore, for the wind blowing in the X direction as shown, the presence of the outer frame portion 41 is dominant in terms of what the flow of the wind will be.

As described above, the same effect may be achieved even when the outer frame portion does not protrude on the front face 1f side and the back face 1r side of the outer end surface 1a in the direction perpendicular to the array 1. When FIG. 13 is taken into consideration in addition to FIG. 6 to FIG. 11, the minimum requirement that the outer frame portion should have is that the outer frame portion is provided along the outer end surface of the array 1 and is located at a position where wind blowing toward the outer end surface initially hits. When the outer frame portion is located at the position where wind blowing toward the outer end surface initially hits, the outer frame portion is dominant in terms of the flow of wind. Thus, by the outer frame portion, for example, the flow of wind can be evenly divided along the front face and the back face of the array, or the flow of wind can be disturbed to suppress occurrence of separated flow. When separated flow can be suppressed, generation of torque around the central axis of the shaft body can be suppressed. Thus, torsional vibration of the array can be suppressed even during strong wind.

### <<Outer frame portion: modification of first example>>

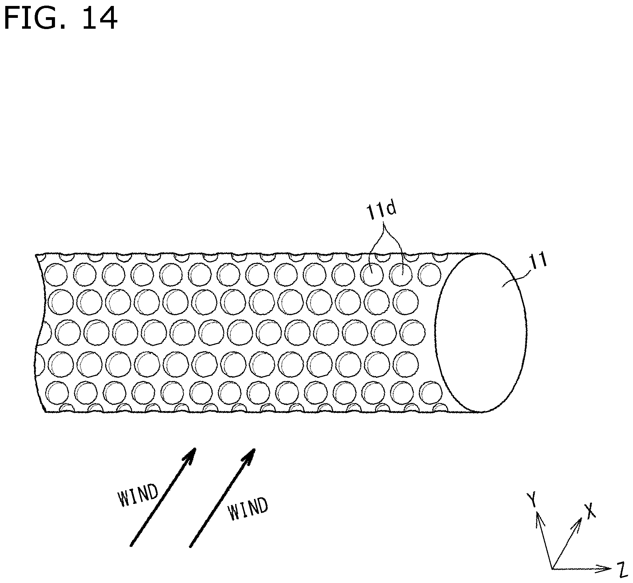

FIG. 14 is a perspective view in which, in the outer frame portion 11 whose outer peripheral surface is a cylindrical surface as shown, for example, in the first example (FIG. 6), a large number of dimples 11d are formed on the cylindrical surface thereof. By providing such dimples 11d, it is possible to finely disturb the airflow of wind to suppress separated flow. The formation of such dimples can also be applied to other examples (FIG. 7, FIG. 8, FIG. 9, FIG. 13).

### <<Outer frame portion: modification of fourth example>>

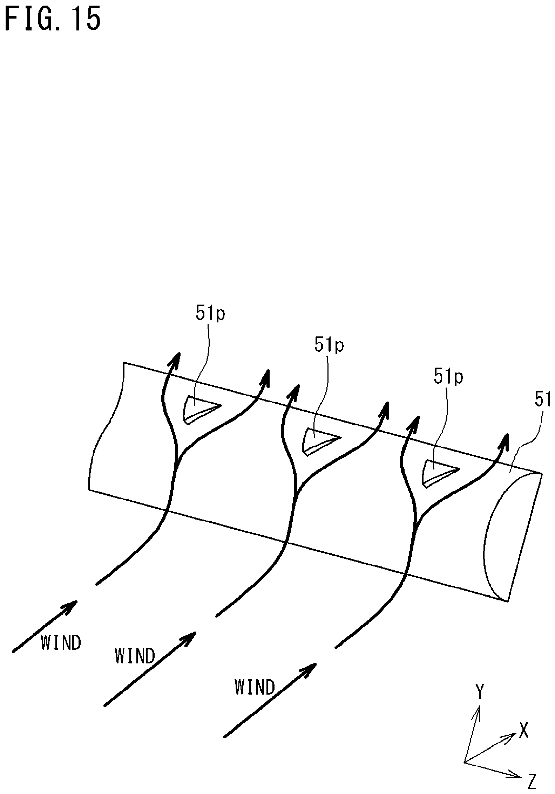

FIG. 15 is a perspective view in which, in the outer frame portion 51 having a semi-cylindrical shape or a semi-columnar shape as shown, for example, in the fourth example (FIG. 9), a plurality of projections 51p are formed on a semi-cylindrical surface thereof. By providing such projections 51p, it is possible to finely disturb the airflow of wind to suppress separated flow. The formation of such projections can also be applied to other examples (FIG. 6, FIG. 7, FIG. 8, FIG. 13).

### <<Outer frame portion: modification of sixth example>>

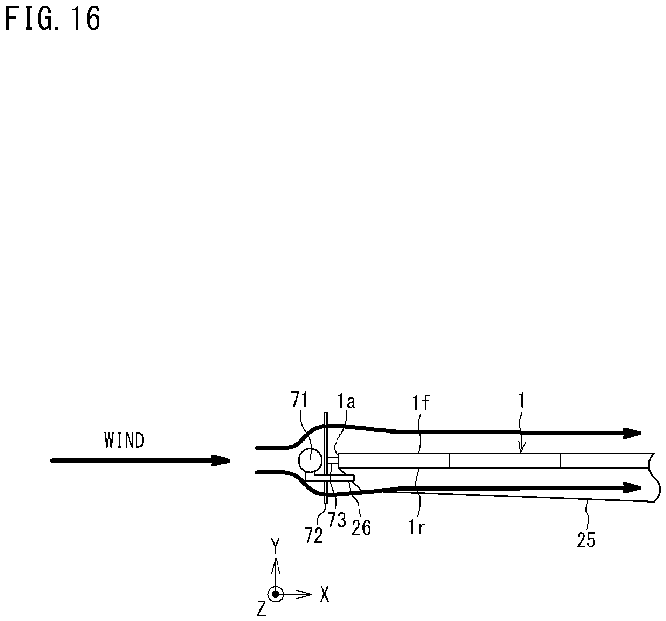

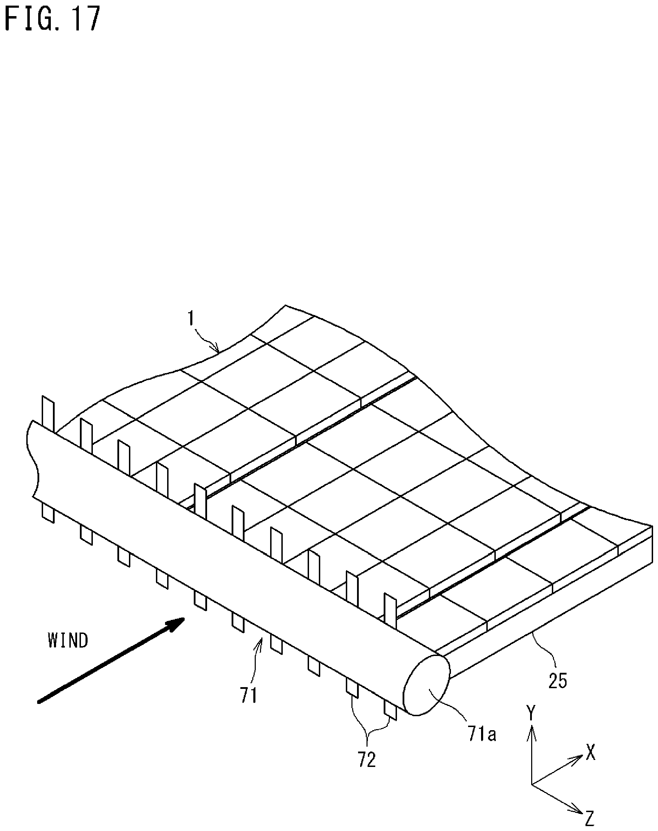

FIG. 16 is an enlarged view of an end portion of the array 1 as viewed, for example, similarly to FIG. 6. FIG. 17 is a perspective view of each portion shown in FIG. 16. Flat plates 72 are provided between the round bar member 71a serving as the outer frame portion 71 and the upper end surface 1a of the array 1 so as to be spaced apart from each other in the Z direction (FIG. 17) such that the flat plates 72 stand in the Y direction perpendicular to the front face and the back face of the array 1 so as to protrude from each of the front face and the back face of the array 1. The flat plates 72 are provided so as to be spaced apart from the outer frame portion 71 in the X direction. The flat plates 72 are supported, for example, by a support member 73 that projects from the upper end surface 1a of the array 1. The material of the flat plates 72 is, for example, an aluminum alloy.

By providing such flat plates 71, it is possible to further finely disturb the air, which is divided on the front and back sides of the array 1 by the outer frame portion 71, to suppress separated flow. Particularly, a combination of the round bar member 71a, that is, a column (or cylinder), and the flat plates on the downstream side of the flow of air is effective in suppressing vibration of the outer frame portion 71 by suppressing Karman vortex excitation. The "flat plate" is a preferable example, but it is considered that a certain effect can be achieved even with a pipe or the like. In addition, the attitude of the flat plate does not necessarily have to be "perpendicular". In more general terms, a plurality of plate-like or rod-like members such as the flat plates 72 are provided between the outer frame portion and the outer end surface of the array so as to be spaced apart from each other and protrude with respect to the front face and the back face of the array. Such a configuration can also be applied to other examples (FIG. 7, FIG. 8, FIG. 9, FIG. 13).

It should be noted that the various outer frame portions described above and the configurations associated therewith can be combined together as desired.

### <<Others>>

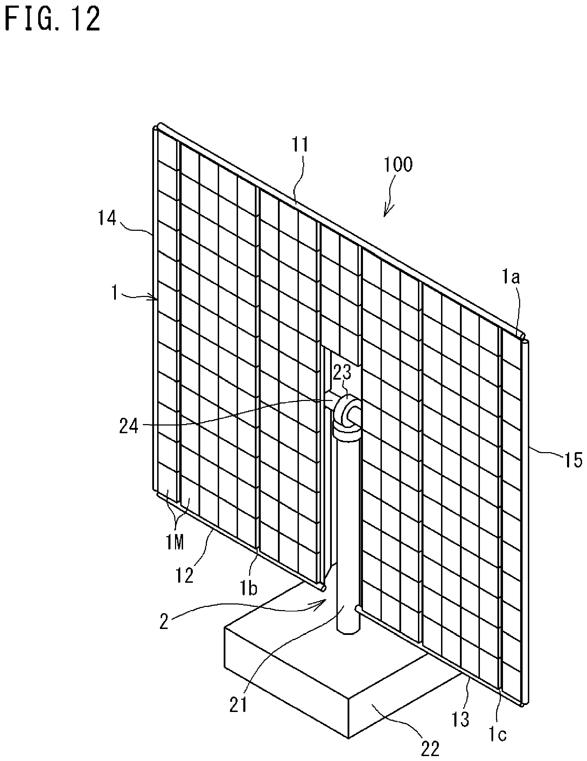

In the above embodiment, the example in which the outer frame portions 11, 12, and 13 are provided only in the direction parallel to the central axis of the shaft body 24 as shown, for example, in FIG. 1, has been shown. This is because the viewpoint of suppressing vibration of the array 1 accompanied by torsion of the shaft body 24 is adopted. However, the shaft body 24 may bend in the longitudinal direction thereof. Therefore, if necessary, outer frame portions 14 and 15 can be provided on the left end surface and the right end surface of the array 1, respectively, as shown in FIG. 12 as an example. In this case, torsional (or bending) vibration of the array 1 can be suppressed against wind blowing from all directions to the array 1.

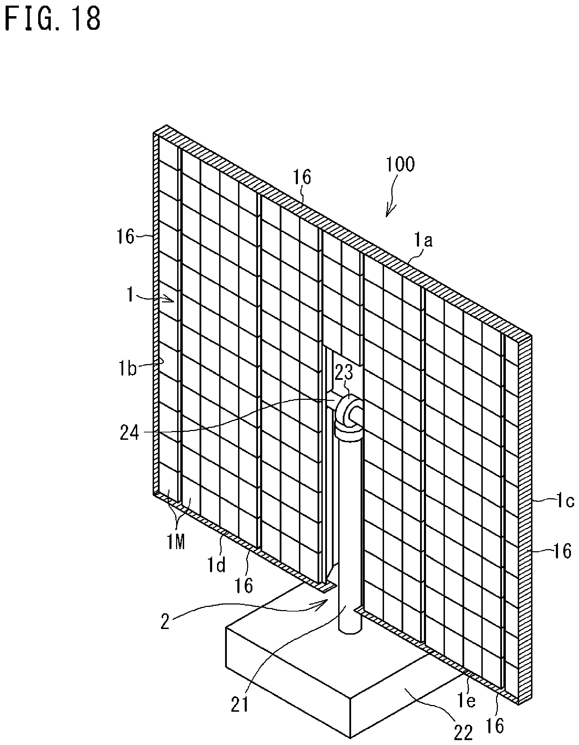

It is also conceivable that, similar to FIG. 12, the outer end surface of the array 1 is covered, for example, by outer frame portions 16 having a corrugated plate shape as shown in FIG. 18. In this case as well, a certain effect can be expected for suppression of separated flow. However, the above-described embodiment (FIG. 1 to FIG. 17) is considered to be more preferable for suppression of separated flow.

In the above embodiment, the biaxial drive type concentrator photovoltaic apparatus 100 which tracks the sun has been shown, but separated flow can be suppressed by providing the outer frame portion to a sun tracking type photovoltaic apparatus with axial drive other than biaxial drive (for example, uniaxial drive) using, for example, crystalline silicon.

### <<Supplementary note>>

The above embodiment is merely illustrative in all aspects and should not be recognized as being restrictive. The scope of the present disclosure is defined by the scope of the claims, and is intended to include meaning equivalent to the scope of the claims and all modifications within the scope.

### REFERENCE SIGNS LIST

- 1: array
- 1a: upper end surface
- 1b, 1c: lower end surface
- 1f: front face
- 1r: back face
- 1M: module (solar cell module)
- 2: support mechanism
- 11: outer frame portion
- 11d: dimple
- 11f: front face side inclined surface
- 11r: back face side inclined surface
- 12, 13, 14, 15, 16: outer frame portion
- 21: post
- 22: base
- 23: drive part
- 24: shaft body
- 25: tracking mount (mount)
- 25a: reinforcement member
- 25b: rail
- 26: support arm
- 31: outer frame portion
- 31f: front face side inclined surface
- 31r: back face side inclined portion
- 41: outer frame portion
- 41f: front face side inclined surface
- 41r: back face side inclined portion
- 51: outer frame portion
- 51f: front face side inclined surface
- 51p: projection
- 51r: back face side inclined portion
- 61: outer frame portion
- 61a: frame
- 61b: inclined portion
- 71: outer frame portion
- 71a: round bar member
- 71b: rib
- 72: flat plate
- 73: support member
- 100: photovoltaic apparatus
- A1, A2: separation region

## Claims

1. A photovoltaic apparatus comprising:
a support mechanism including a mount having a shaft body serving as a rotation shaft when tracking the sun, and a drive part configured to drive the shaft body;
an array formed on the mount by arranging solar cell modules; and
an outer frame portion provided along an outer end surface, of the array, parallel to a central axis direction of the shaft body and located at a position where wind blowing toward the outer end surface initially hits.

2. The photovoltaic apparatus according to claim 1, wherein the outer frame portion has, as a shape as viewed from an end surface in a longitudinal direction thereof, a front face side inclined surface configured to guide wind blowing in a direction parallel to the array, to a front face of the array, and a back face side inclined surface configured to guide the wind to a back face of the array.

3. The photovoltaic apparatus according to claim 2, wherein the shape as viewed from the end surface in the longitudinal direction is a circular shape or an elliptical shape.

4. The photovoltaic apparatus according to claim 2, wherein the shape as viewed from the end surface in the longitudinal direction is a triangular shape having a base on the outer end surface side.

5. The photovoltaic apparatus according to claim 2, wherein the shape as viewed from the end surface in the longitudinal direction is a semi-circular shape or a semi-elliptical shape having a straight line on the outer end surface side.

6. The photovoltaic apparatus according to any one of claims 1 to 5, wherein a plurality of dimples or projections are formed on a surface of the outer frame portion.

7. The photovoltaic apparatus according to any one of claims 1 to 5, wherein a plurality of plate-like or rod-like members are provided between the outer frame portion and the outer end surface so as to be spaced apart from each other and protrude with respect to the front face and the back face of the array.

8. The photovoltaic apparatus according to claim 1, wherein a plurality of inclined portions extending obliquely with respect to the central axis are present in the outer frame portion at predetermined intervals.

9. The photovoltaic apparatus according to claim 8, wherein the outer frame portion is in a net-like form facing the outer end surface.

10. The photovoltaic apparatus according to claim 8, wherein the outer frame portion has a projection spirally formed on a cylindrical or columnar surface thereof.

11. The photovoltaic apparatus according to any one of claims 1 to 10, wherein
the outer frame portion is a first outer frame portion, and
the photovoltaic apparatus includes a second outer frame portion provided along an outer end surface, of the array, extending in a direction orthogonal to the central axis direction of the shaft body.
